(19) Europäisches Patentamt
European Patent Office
Office européen des brevets

(11) **EP 4 741 519 A1**

(12) **EUROPEAN PATENT APPLICATION**

(43) Date of publication:
**13.05.2026 Bulletin 2026/20**

(21) Application number: **25190387.8**

(22) Date of filing: **18.07.2025**

(51) International Patent Classification (IPC):
**C22B 11/00** (2006.01)   **C22B 3/04** (2006.01)
**C22B 5/12** (2006.01)   **H01M 8/008** (2016.01)
**C25B 1/01** (2021.01)   **C25B 1/50** (2021.01)

(52) Cooperative Patent Classification (CPC):
**C25B 1/01; C22B 3/045; C22B 5/12; C22B 11/042;
C22B 11/048; C25B 1/50; H01M 8/008; C25C 1/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.11.2024 JP 2024197484**

(71) Applicants:
• **Kabushiki Kaisha Toshiba
Tokyo 105-0023 (JP)**
• **Toshiba Energy Systems & Solutions
Corporation
Saiwai-ku
Kawasaki-shi
Kanagawa (JP)**

(72) Inventors:
• **KANAMURA, Shohei
Kawasaki-shi, Kanagawa (JP)**
• **YAGYU, Motoshige
Kawasaki-shi, Kanagawa (JP)**
• **OOMORI, Takashi
Kawasaki-shi, Kanagawa (JP)**

(74) Representative: **Hoffmann Eitle
Patent- und Rechtsanwälte PartmbB
Arabellastraße 30
81925 München (DE)**

(54) **METHOD OF RECOVERING VALUABLE RESOURCE**

(57)   A method of recovering a valuable resource from an electrochemical device including a catalyst of an oxide of a noble metal, includes: reducing the oxide while heating an object that has the catalyst; and applying a voltage to the object that is in contact with a solution containing at least one selected from the group consisting of ion species and chemical species which can form a complex with the noble metal, continuously increasing an absolute value of the voltage and then holding the value while periodically reversing a polarity of the voltage to perform an electrolytic reaction and dissolve the reduced noble metal in the solution as ions.

EP 4 741 519 A1

# EP 4 741 519 A1

## Description

FIELD

Embodiments relate to a method of recovering a valuable resource.

BACKGROUND

As global transition to a carbon neutral society progresses, hydrogen is being focused on as an alternative to fossil energy. One of currently considered methods of utilizing hydrogen is a fuel cell, which obtains electric energy by making hydrogen and oxygen react electrochemically. Among the fuel cells, a polymer electrolyte fuel cell (PEFC), which uses a solid polymer membrane as an electrolyte and is operated at a temperature equal to or lower than 100°C, went on the market in 2009 as a household fuel cell cogeneration system (brand name: ENE FARM (registered trademark)). Further, the PEFC is also beginning to be installed in moving bodies such as a fuel cell vehicle (FCV), a forklift, a bus, and a truck, and demand for the PEFC is expected to increase further in the future.

At the same time, a technology is being developed to produce a large amount of hydrogen to be used in the PEFC by electrolysis of water. There are various methods of water electrolysis, and mainly developed are high-temperature steam electrolysis using steam of several hundred degrees as a raw material and polymer electrolyte membrane (PEM)-type water electrolysis, which is operated at around a room temperature. A PEM-type water electrolysis device has characteristics such that high-temperature operation is unnecessary and that a configuration of the water electrolysis device is similar to that of the PEFC, thereby making development of cell easy, so that PEM-type water electrolysis devices of megawatt size are being introduced in countries throughout the world.

The PEM-type water electrolysis device is constituted by components similar to those of the PEFC, and an electrolysis reaction proceeds in a membrane electrode assembly (MEA) constituted by an electrolyte membrane, an electrode catalyst, and a gas diffusion layer (GDL). In order to curtail energy at the time of electrolysis reaction, a noble metal element, which facilitates occurrence of a hydrogen evolution reaction and an oxygen evolution reaction, is usually used as the electrode catalyst. Currently, a cathode, where the hydrogen evolution reaction occurs, is formed by using platinum and an anode, where the oxygen evolution reaction occurs, is formed by using a catalyst containing iridium.

For transition to a hydrogen society, introduction of the PEFC and the PEM-type water electrolysis device increases inevitably in order to realize a carbon-neutral society, and it is essential to secure valuable resources such as noble metal elements used in the aforementioned devices. Means for securing the noble metal elements include development of new mines, development of mining technology, and development of recycling technology. However, Japan depends on foreign countries to secure most of the noble metal elements such as platinum, ruthenium, and iridium, and cannot respond to situations such as a conflict and a battle for resources only by the development of mines or development of mining technology. Therefore, it is important to develop a technology to recover noble metal elements from devices which are already distributed in the world.

REFERENCE

Patent Document 1: Japanese Patent No. 1626036
Patent Document 2: Japanese Patent No. 6652518
Patent Document 3: Japanese Patent No. 6652454
Patent Document 4: Japanese Patent No. 6109769
Patent Document 5: Japanese Laid-open Patent Publication No. S63-270421

Non-Patent Document 1: KOFUJI Yusuke et al., "CO2 Electrolysis Cell Operating at High Current Density for Power-to-Chemicals Co2 Utilization", Toshiba Review, Vol. 75, No. 6, p. 48-51 (November, 2020)
Non-Patent Document 2: Mohammad Fathi Tovini et al., "Degradation Mechanism of an IrO2 Anode Co-Catalyst for Cell Voltage Reversal Mitigation under Transient Operation Conditions of a PEM Fuel Cell", J. Electrochem. Soc., 168, 064521 (2021)

SUMMARY

A problem to be solved by the present invention is to recover a valuable resource efficiently.

A method of recovering a valuable resource from an electrochemical device including a catalyst of an oxide of a noble metal, includes: reducing the oxide while heating an object that has the catalyst; and applying a voltage to the object that is in contact with a solution containing at least one selected from the group consisting of ion species and chemical species which can form a complex with the noble metal, continuously increasing an absolute value of the voltage and then holding the value while periodically reversing a polarity of the voltage to perform an electrolytic reaction and dissolve the reduced noble metal in the solution as ions.

BRIEF DESCRIPTION OF THE DRAWINGS

FIG. 1 is a flowchart to explain an example of a method of recovering a valuable resource.

FIG. 2 is a schematic view illustrating an example of an object from which a valuable resource is recovered.

FIG. 3 is a graph illustrating a temporal variation of a voltage applied to an electrochemical device in order to recover a valuable resource by conventional electrolysis.

FIG. 4 is a a graph illustrating a temporal variation of a voltage in an embodiment.

FIG. 5 is a schematic view illustrating an electric circuit (equivalent circuit) that represents the inside of an electrochemical device.

FIG. 6 is a diagram illustrating a temporal variation of a voltage E.

FIG. 7 is a diagram illustrating a temporal variation of a current i.

FIG. 8 is a diagram illustrating an example of a temporal variation of a voltage E.

FIG. 9 is a diagram illustrating an example of a temporal variation of a current i.

FIG. 10 is a graph illustrating another example of a temporal variation of a voltage wave in a method of controlling a voltage of the embodiment.

FIG. 11 is a schematic view illustrating a configuration example of a PEM-type water electrolysis device.

FIG. 12 is a schematic view illustrating a configuration example of a valuable resource recovery device.

FIG. 13 is a view illustrating an Ir dissolution rate.

DETAILED DESCRIPTION

Hereinafter, embodiments will be explained with reference to the drawings. In each embodiment below, the same codes may denote substantially the same component parts to partially omit explanation thereof. The drawings are schematic ones in which a relationship between a thickness and a planar dimension, a thickness ratio among components, and so on may be different from actual ones.

Note that in this specification "connecting" may include not only connecting directly but also connecting indirectly, unless otherwise specified.

A mode of the embodiment is a method of recovering a noble metal contained in a catalyst used in an electrochemical device such as a water electrolysis device (method of recovering a valuable resource). The catalyst has a function of accelerating an electrolytic reaction such as an oxidation reaction and a reduction reaction by the electrochemical device and an electrolytic reaction of an electrolyte or a solute. An example of the method of recovering the valuable resource will be explained below.

(Example of Method of Recovering Valuable Resource)

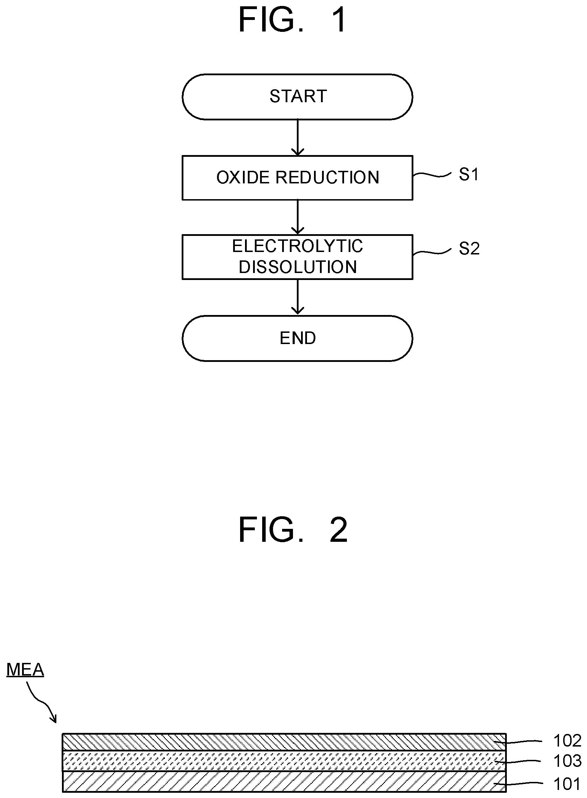

FIG. 1 is a flowchart to explain an example of a method of recovering a valuable resource. The example of the method of recovering the valuable resource has an oxide reduction process S1 and an electrolytic dissolution process S2. The oxide reduction process S1 and the electrolytic dissolution process S2 are performed, for example, in order.

FIG. 2 is a schematic view illustrating an example of an object containing a valuable resource. Examples of the object include an MEA and so on. The MEA has an anode 101, a cathode 102, and an electrolyte membrane 103 between the anode 101 and the cathode 102. The anode 101, the cathode 102, and the electrolyte membrane 103 are stacked on each other. The MEA is used for an electrochemical device such as a PEM-type water electrolysis device, for example. The anode 101 and the cathode 102 each have a catalyst such as, for example, an anode catalyst and a cathode catalyst. The catalyst is constituted by a noble metal being a valuable resource, for example. Examples of the noble metal include platinum (Pt), iridium (Ir), ruthenium (Ru), rhodium (Rh), palladium (Pd), gold (Au), rhenium (Re), and so on. The catalyst may include an oxide that contains at least one of the aforementioned noble metals. Examples of the electrolyte membrane 103 include a polymer electrolyte membrane. The object is not limited to the MEA.

The oxide reduction process S1 includes reducing an oxide of a noble metal. The oxide of the noble metal is used, for example, as a catalyst of an electrochemical device and is used as a catalyst (anode catalyst) of the anode 101, for example. Examples of the oxides of the noble metals include an iridium oxide ($IrO_2$), a ruthenium oxide ($RuO_2$), a rhodium oxide, a palladium oxide, a platinum oxide, a gold oxide, a rhenium oxide, and so on.

The oxide reduction process S1 can be performed by a chemical method such as, for example, a method of supplying a solution containing a reducing agent and bringing the reducing agent into contact with the object, a method of supplying a reducing gas and bringing the reducing gas into contact with the object, or a method of bringing an electrolytic solution into contact with the object, applying a voltage to the object, and performing an electrolytic reaction without reversing a polarity of the voltage. The electrolytic solution may contain at least one of ion species and chemical species which can form a complex with the noble metal.

The electrolytic dissolution process S2 includes supplying a solution containing at least one of ion species and chemical species which can form the complex with the noble metal, bringing the solution into contact with the object (for example, an electrode with an oxide catalyst, or the like), applying a voltage to the object that is in contact with the solution, and reversing a polarity of the voltage periodically and performing an electrolytic reaction. In other words, the electrolytic dissolution process S2 involves alternately performing an oxidation reaction and a reduction reaction. A value of the voltage can be set as appropriate by using an external power supply, for example. By the electrolytic dissolution process S2, the noble metal having been reduced can be dissolved into the solution as ions. The noble metal dissolved into the solution can then be recovered by separation from the solution. The solution includes, for example, hydrochloric acid (HCl), for example. The solution is not limited to be supplied after the oxide reduction process S1 but may be supplied before the oxide reduction process S1.

In example method of dissolving catalysts of noble metals such as Pt and Ru, a solution containing a component capable of forming a complex with a target noble metal is injected into the electrochemical device, and an extremely thin noble metal oxide film existing on a metal catalyst surface is converted to a metal by a reduction treatment, and thereafter, the exposed metal is dissolved by an oxidation treatment. At the time of oxidation treatment, not only dissolution but also formation of an oxide film proceeds simultaneously, so that a dissolution reaction stops when the metal is covered by the oxide film. Since the oxide film is removed by performing the reduction treatment again, performing reduction and oxidation alternately makes it possible to dissolve the noble metal that is normally indissoluble. In other words, a conventional method is a technique for dissolving a noble metal with a thin oxide on a surface thereof.

On the other hand, since the catalyst targeted in this embodiment is entirely an oxide, and, in the case of $IrO_2$, for example, an Ir dissolution reaction does not proceed by the same method as the conventional technology. Therefore, in this embodiment, in order to perform noble metal dissolution, an oxide of a noble metal is reduced to the noble metal in the oxide reduction process S1. In the oxide reduction process S1, for example, $IrO_2$ can be reduced to a metal Ir.

The oxide reduction process S1 is preferably performed while heating is carried out at the time of the reduction reaction, in order to accelerate the reduction reaction such as an $IrO_2$ reduction reaction. For example, by reducing the oxide of the noble metal by using the aforementioned method while heating the object by a heater, a reduction reaction rate is increased, so that a reduction efficiency per the same time can be improved. The oxide reduction process S1 is preferably performed at a temperature equal to or higher than 100°C, more preferably performed at a temperature equal to or higher than 150°C, for example. An upper limit of the aforementioned temperature is not particularly limited, but in the case where a polymer electrolyte membrane is included in the object, for example, the upper limit of the temperature is equal to or lower than 300°C where an electrolyte membrane is not thermally decomposed.

When the solution containing the reducing agent is brought into contact, if an oxalic acid solution is used, as an example, a reduction reaction proceeds according to Formula (1).

$$IrO_2 + 2(COOH) = Ir + 4CO_2 + 2H_2O \quad \Delta G = -510.7 kJ ... \qquad (1)$$

When the reducing gas is brought into contact, if a hydrogen gas is used, a reduction reaction proceeds according to Formula (2).

$$IrO_2 + 2H_2 = Ir + 2H_2O \quad \Delta G = -281.4 \ kJ ... \qquad (2)$$

In the case of electrochemical reduction in an aqueous solution, a reduction reaction expressed by Formula (3) proceeds by controlling an electrode potential to a potential lower than 0.926 vs. SHE.

$$IrO_2 + 4H^+ + 4e^- = Ir + 2H_2O \quad E° = 0.926 \ V \ vs. \ SHE ... \qquad (3)$$

Since $IrO_2$ becomes the metal Ir when the reduction treatment is performed in the oxide reduction process S1, it is possible to dissolve Ir in the electrolytic dissolution process S2, in which electrolysis is performed while reversing the polarity. To perform electrolytic dissolution, contact with a solution containing ion species or chemical species which can form a complex with Ir is required. As the solution, it is possible to use hydrochloric acid containing chloride ions, and it is also possible to use a solution containing chloride ions in an acid solution such as, for example, sulfuric acid in which sodium chloride is dissolved.

As described above, in the example of the method of recovering the valuable resource, by providing the oxide reduction process S1 that is different from the electrolytic dissolution process S2, the valuable resource can be recovered highly efficiently by reducing the oxide, even when the oxide of the noble metal is used as the catalyst. Further, in the example of the method of recovering the valuable resource, since polarity reversal in the electrolytic dissolution process S2 can be performed under a simple application condition, operability of polarity reversal can be improved.

In the electrolytic dissolution process S2, a rectangular wave that reverses a polarity at a constant period can be used as the applied voltage, but when electrolysis is performed with the rectangular wave, an extremely large current may flow to the electrochemical device at the time of polarity reversal.

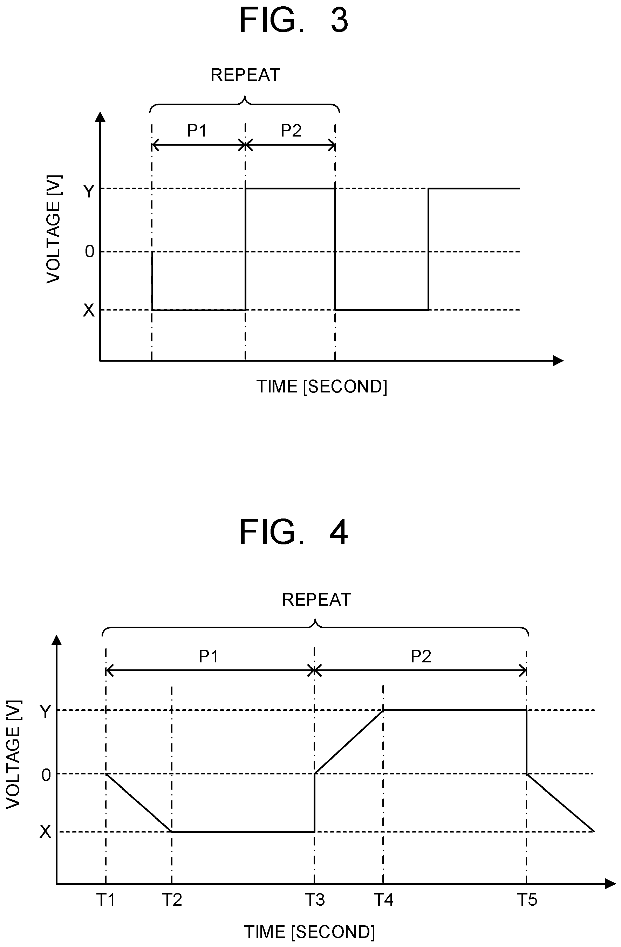

FIG. 3 is a graph illustrating a temporal variation of a voltage applied to an electrochemical device in order to recover a valuable resource by conventional electrolysis. A horizontal axis of the graph represents a time [second]. A vertical axis of the graph represents a voltage [V] applied to the electrochemical device. In the conventional recovery of the valuable resource, voltages X and Y are periodically applied to the electrochemical device in a rectangular wave as illustrated in FIG. 3, to thereby dissolve a platinum group metal such as platinum and ruthenium. The voltage X has a value lower than the voltage Y. The voltage Y has a value higher than the voltage X, that is, a positive value, for example. However, in the above method of controlling the voltage, a spike-like nonfaradaic current flows at the moment of switching from the voltage X to the voltage Y and from the voltage Y to the voltage X, and there is a problem that electrolysis operation cannot be performed if an output of the electrochemical device is insufficient. As described above, though noble metal dissolution is possible by the aforementioned method, considering a size increase of the device, a large current flows at the time of polarity reversal, and there is required an increase in a device cost and a safety mechanism against a large current.

Thus, hereinafter, there will be explained a method of controlling a voltage which is capable of dissolving a noble metal while suppressing a large nonfaradaic current that flows at the time of polarity reversal. In this embodiment, a polarity of a voltage is periodically reversed not by a rectangular wave but by increasing an absolute value of a voltage over time and thereafter holding that value as illustrated in FIG. 4. Thereby, it is possible to suppress instantaneous flowing of a large nonfaradaic current. In other words, in this embodiment, when reversing the polarity of the voltage, an inclination of a voltage wave from a value being a reference such as 0 V to a target value of an applied voltage is made larger than a rectangular wave. Examples of such a voltage wave include a trapezoidal wave.

FIG. 4 is a graph illustrating a temporal variation of the voltage in the embodiment. A horizontal axis of the graph represents a time [second]. A vertical axis of the graph represents a voltage [V] applied to the electrochemical device 100. In the method of controlling the voltage of the embodiment, since an electrolytic reaction is performed by applying the voltage to the electrochemical device 100, thereby reversing the polarity of the voltage periodically, there are a period P1 of a first polarity and a period P2 of a second polarity reverse to the first polarity. In recovering the valuable resource, the period P1 and the period P2 are alternately switched and repeated. The voltage is applied, for example, to the electrode with the aforementioned catalyst.

In the period P1, a value of the voltage applied to the electrochemical device 100 is decreased over time from a time T1 to a time T2 to a value equal to or lower than a value of a voltage X. The voltage X is lower than a voltage Y. Note that the voltage X is not limited to have a negative value lower than 0 V, but may have a positive value. In FIG. 4, an example of decreasing the voltage over time from 0 V to the voltage X is shown, but the voltage may be decreased over time from a value different from 0 V to the voltage X.

Next, the value of the voltage applied to the electrochemical device 100 is held equal to or lower than the value of the voltage X from the time T2 to a time T3. FIG. 4 illustrates an example of holding the voltage at the value of the voltage X as an example, but the value is not necessarily required to be a constant value. The voltage held until the time T3 then changes to 0 V by stopping of application. On this occasion, the value of the voltage may be increased over time from the value of the voltage X to 0 V.

Next, in the period P2, the value of the voltage applied to the electrochemical device 100 is increased over time from the time T3 to a time T4 to a value equal to or higher than the voltage Y. The voltage Y is higher than the voltage X. The voltage Y has a value higher than 0 V, that is, a positive value, for example. In FIG. 4, an example of increasing the voltage from 0 V to the voltage Y over time is shown, but the voltage may be increased over time from a value different from 0 V to the voltage Y.

Next, the value of the voltage applied to the electrochemical device 100 is held at the value equal to or higher than the value of the voltage Y from the time T4 to a time T5. In FIG. 4, an example of holding the value at the value of the voltage Y is shown as an example, but the value is not necessarily required to be a constant value. The voltage whose value is held until the time T5 then changes to 0 V by stopping of application. On this occasion, the value of the voltage may be decreased over time from the value of the voltage Y to 0 V.

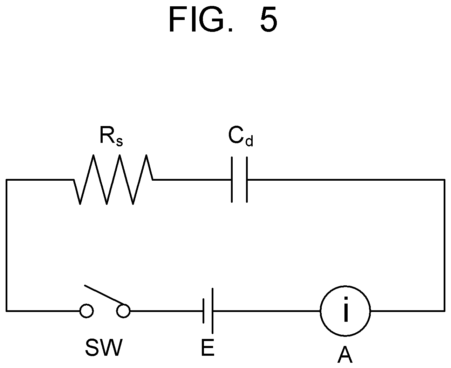

Here, it is explained that a spike-shaped nonfaradaic current can be suppressed by changing the voltage wave from the rectangular wave to the trapezoidal wave. FIG. 5 is a schematic view illustrating an electric circuit (equivalent circuit) that represents the inside of an electrochemical device. When the inside of the electrochemical device is represented by an electric circuit, the electric circuit is an RC circuit where a resistor $R_s$ of an electrolytic solution and an electric double layer (capacitor) $C_d$ are connected as illustrated in FIG. 5. FIG. 5 further illustrates a switch SW that controls supply of a voltage E to the electrochemical device and a current i flowing inside the electrochemical device.

Formula (1) holds for a voltage $E_c$ applied to the electric double layer, a charged electricity quantity q, and a capacitor $C_d$.
[Formula 1]

$$q = C_d E_c \qquad (1)$$

If the voltage applied to the electrochemical device is represented by E when the switch SW is in a state of ON, a total sum of a voltage drop $iR_s$ in the electrolytic solution and the voltage $E_c$ applied to the electric double layer is required to be equal to E, so that Formula (2) holds.
[Formula 2]

$$E = i R_s + E_c = i R_s + \frac{q}{C_d} \qquad (2)$$

Further, the current i is the electricity quantity flowing per unit time and thus can be expressed by Formula (3).
[Formula 3]

$$i = \frac{dq}{dt} \qquad (3)$$

By substituting Formula (3) into Formula (2), Formula (4) can be obtained.
[Formula 4]

$$\frac{dq}{dt} = \frac{-q}{R_s C_d} + \frac{E}{R_s} \qquad (4)$$

By solving a differential equation of Formula (4) under the condition that q = 0 when t = 0 for differentiation, a variation of the current i in relation to the time t can be obtained as shown in Formula (5). The current i in this case is a nonfaradaic current.
[Formula 5]

$$i = \frac{E}{R_s} \exp\left(-\frac{t}{R_s C_d}\right) \qquad (5)$$

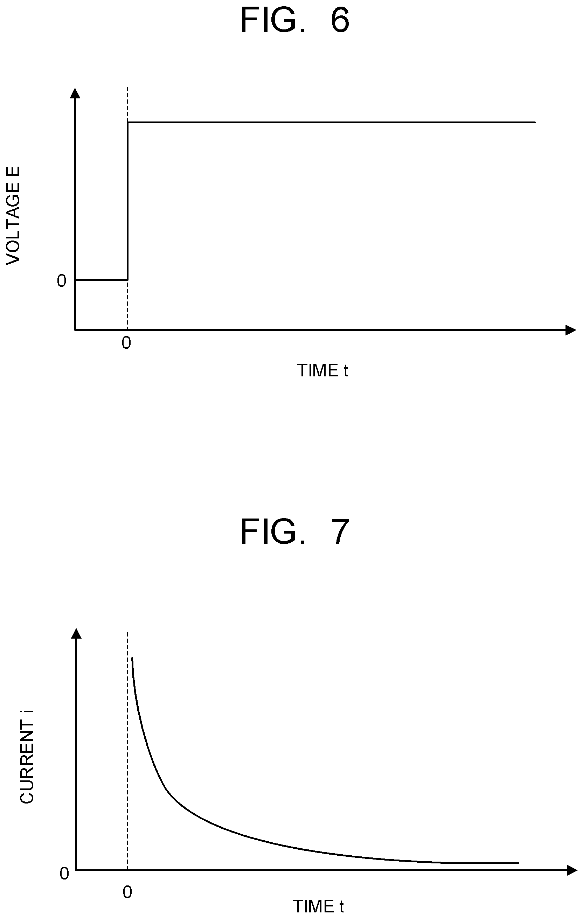

FIG. 6 and FIG. 7 are qualitative illustration of Formula 5. FIG. 6 illustrates an example of a temporal variation of the voltage E. FIG. 7 illustrates an example of a temporal variation of the current i. It is found from FIG. 6 and FIG. 7 that a large current flows at the time of voltage application.

Next, the case where the voltage is applied to the electrochemical device in the trapezoidal wave will be explained. In this case, the voltage E increases gradually with an inclination v in relation to the time t, which can be expressed by Formula (6).
[Formula 6]

$$E = v t \qquad (6)$$

By substituting Formula (6) into Formula (4), Formula (7) can be obtained.
[Formula 7]

$$v t = R_s \frac{dq}{dt} + \frac{q}{R_s} \qquad (7)$$

By solving the above under the condition that q = 0 when t = 0 for further differentiation, Formula (8) can be obtained.

[Formula 8]

$$i = v C_d \left[ 1 - exp \left( -\frac{t}{R_s C_d} \right) \right] \qquad (8)$$

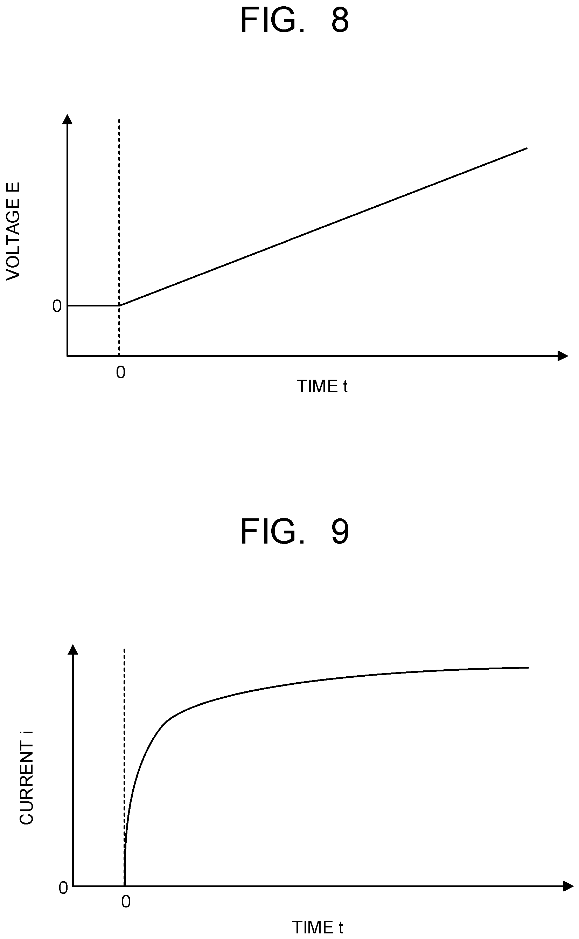

FIG. 8 and FIG. 9 are qualitative illustration of Formula (8). FIG. 8 illustrates an example of the temporal variation of the voltage E. FIG. 9 illustrates an example of the temporal variation of the current i. As obvious from FIG. 8 and FIG. 9, unlike the case of the rectangular wave, a nonfaradaic current gradually increases and finally reaches a constant value determined by the voltage control condition and the electrochemical device. Therefore, compared with the case of applying a voltage in a rectangular wave, it is possible to suppress the large nonfaradaic current that flows instantaneously due to an increase of an absolute value of the voltage over time when reversing the polarity. Note that in FIG. 4, the trapezoidal wave where the absolute value of the voltage is increased linearly in relation to the time is explained, but instantaneous flowing of a large nonfaradaic current can be suppressed also in the case where the absolute value of the voltage is changed curvilinearly. Further, if at least a part of the voltage increases over time, instantaneous flowing of a large nonfaradaic current can be suppressed, for example, also in the case where the absolute value of the voltage is changed in a staircase shape.

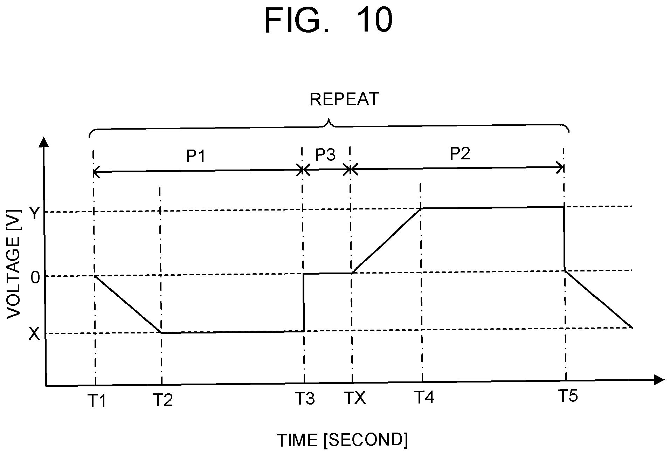

In this embodiment, if the absolute value of the voltage can be increased over time in reversing the polarity of the voltage, a period in which a voltage is not applied may be provided, for example, before the voltage is decreased or increased over time. FIG. 10 is a graph illustrating another example of the temporal variation of the voltage in the method of controlling the voltage of the embodiment. A horizontal axis of the graph represents a time [second]. A vertical axis of the graph represents a voltage [V] applied to the electrochemical device 100. FIG. 10 illustrates, as an example, an example with a period P3 between the period P1 and the period P2 in FIG. 4, but without being limited to the above, the period P3 is provided before the period P1 or before the period P2. These periods are repeated in the order of the period P1, the period P3, and the period P2 or in the order of the period P2, the period P3, and the period P1. In the period P3, application of the voltage is halted, for example, from the time T3 to a time TX, and the value of the voltage is then changed over time from the time TX to the time T4. By providing the period P3, an electric charge having been charged to an electrode can be suppressed from flowing back to the power supply.

A time necessary for decreasing from 0 V to a value equal to or lower than a value of the voltage X in the period P1 and a time necessary for increasing from 0 V to a value equal to or higher than a value of the voltage Y in the period P2 are preferably 0.6 seconds or longer and further preferably 1 second or longer, respectively. The time of 0.6 seconds or longer can suppress instantaneous flowing of a large nonfaradaic current. An upper limit of the aforementioned time is not limited in particular, but is 60 seconds or shorter, for example. The aforementioned time can be controlled by adjusting a rate of increase of the absolute value of the voltage (inclination of the voltage wave), for example, by the voltage control device.

Next, an example of an electrochemical device capable of implementing the example of the method of recovering the valuable resource will be explained below.

(First Configuration Example of Electrochemical Device)

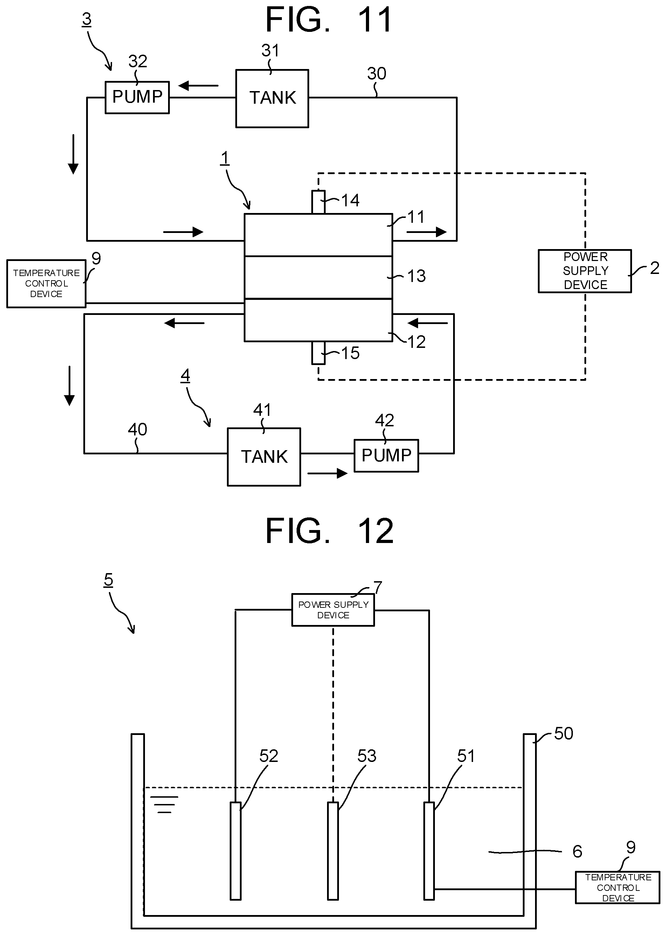

FIG. 11 is a schematic view illustrating a configuration example of a PEM-type water electrolysis device. The PEM-type water electrolysis device has an electrochemical cell unit 1, a power supply device 2, an anode solution supply line 3, a cathode solution supply line 4, and a temperature control device 9.

The electrochemical cell unit 1 has an anode chamber 11, a cathode chamber 12, a diaphragm 13, an electrode terminal 14, and an electrode terminal 15.

The anode chamber 11 has an anode 101 illustrated in FIG. 2. The anode 101 can oxidize water to produce hydrogen ions and oxygen, for example. The anode 101 has an anode catalyst. Examples of the anode catalyst include an iridium oxide ($IrO_2$) and a ruthenium oxide ($RuO_2$). A plurality of these catalytic materials may be contained. In the case of the PEM-type water electrolysis device, the anode catalyst promotes an oxidation reaction of water, for example.

The cathode chamber 12 has a cathode 102 illustrated in FIG. 2. The cathode 102 can reduce hydrogen ions to produce hydrogen, for example. The cathode 102 has a cathode catalyst. Examples of the cathode catalyst include platinum (Pt).

The diaphragm 13 is provided between the anode chamber 11 and the cathode chamber 12. The diaphragm 13 divides the anode chamber 11 and the cathode chamber 12. The diaphragm 13 has an electrolyte membrane 103 illustrated in FIG. 2, which is provided between the anode 101 and the cathode 102. Examples of the electrolyte membrane 103 include an electrolyte membrane containing a fluorine-based polymeric material that has a sulfonic acid group.

The electrode terminal 14 is electrically connected to the anode 101. The electrode terminal 14 is connected to the power supply device 2, for example, via a wiring.

The electrode terminal 15 is electrically connected to the cathode 102. The electrode terminal 15 is connected to the power supply device 2, for example, via a wiring.

The power supply device 2 can apply a voltage to an MEA via the electrode terminal 14 and the electrode terminal 15. The power supply device 2 can periodically switch a polarity of the voltage applied to the MEA, and can adjust a value of each voltage. The polarity of the voltage applied to the MEA may be switched by a relay circuit provided between the power supply device 2 and the electrode terminal 14 as well as the electrode terminal 15, for example. The power supply device 2 may have a power supply generating a voltage and a voltage control device adjusting a value of the voltage.

The anode solution supply line 3 has an anode flow path 30, a tank 31, and a pump 32, and is configured such that the anode solution circulates through the anode flow path 30. The anode solution supply line 3 connects an inlet and an outlet of the anode chamber 11 via the anode flow path 30. The tank 31 is provided in the middle of the anode flow path 30 and can contain the anode solution. The pump 32 is provided in the middle of the anode flow path 30, for example, at a subsequent stage of the tank 31, and can control a pressure of the anode flow path 30 and a flow rate of a fluid flowing through the anode flow path 30. In the case where a reducing gas is supplied to reduce an oxide, the aforementioned gas instead of the anode solution may be supplied to the anode chamber 11 from a not-shown gas supply source, for example, via the anode flow path 30 and discharged via the anode flow path 30.

The electrochemical cell unit 1 is connected to the temperature control device 9. The temperature control device 9 can heat the electrochemical cell unit 1. The temperature control device 9 includes, for example, a heater. For example, by heating the electrochemical cell unit 1 by the temperature control device 9, an oxide reduction process S1 can be performed at a temperature equal to or higher than 100°C, for example.

The cathode solution supply line 4 has a cathode flow path 40, a tank 41, and a pump 42, and is configured such that the cathode solution circulates through the cathode flow path 40. The cathode solution supply line 4 connects an inlet and an outlet of the cathode chamber 12 via the cathode flow path 40. The tank 41 is provided in the middle of the cathode flow path 40 and can contain the cathode solution. The pump 42 is provided in the middle of the cathode flow path 40, for example, at a subsequent stage of the tank 41, and can control a pressure of the cathode flow path 40 and a flow rate of a fluid flowing through the cathode flow path 40.

The anode solution and the cathode solution each contain at least one of ion species and chemical species which can form a complex with the noble metal such as iridium and platinum. The anode solution and the cathode solution include hydrochloric acid, for example.

As described above, the first configuration example of the electrochemical device is the PEM-type water electrolysis device, which can implement the example of the method of recovering the valuable resource without removing the MEA from the PEM-type water electrolysis device. Thereby, it is possible to recover the noble metals such as platinum and iridium, which are used as the anode catalyst and the cathode catalyst, by the same process. Thereby, the valuable resource can be recovered more easily than, for example, in the case where the valuable resource is recovered after destruction and sorting of the PEM-type water electrolysis device.

(Second Configuration Example of Electrochemical Device)

FIG. 12 is a schematic view illustrating a configuration example of a valuable resource recovery device. The valuable resource recovery device 5 has a liquid tank 50, an MEA 51, a counter electrode 52, and a reference electrode 53.

The liquid tank 50 can contain an electrolyte solution 6. The electrolyte solution 6 includes supplying a solution containing at least one of ionic species and chemical species which can form a complex with a noble metal and bringing the solution into contact with an object. The solution includes hydrochloric acid, for example. The liquid tank 50 has an inlet port and an outlet port, and by an electrolytic dissolution process S2, the solution may be supplied to the liquid tank 50 via the inlet port and the solution may be discharged from the liquid tank 50 via the outlet port. In the case of reducing an oxide by supplying a reducing gas, the aforementioned gas instead of the solution may be supplied via the inlet port and discharged via the outlet port.

The MEA 51 is removed from another electrochemical device, and mounted and placed in the liquid tank 50. The MEA 51 can be immersed in the electrolyte solution 6 contained in the liquid tank 50. Examples of another electrochemical device include a PEM-type water electrolysis device illustrated in FIG. 11.

The counter electrode 52 is placed in the liquid tank 50. The counter electrode 52 can be immersed in the electrolyte solution 6 contained in the liquid tank 50. The counter electrode 52 is made of a material that is insoluble in the electrolyte solution 6 and conductive. Examples of the counter electrode 52 include a carbon electrode and so on. Further, an MEA different from the MEA 51 may be used as the counter electrode 52 and a voltage may be applied between the two MEAs.

The reference electrode 53 is placed in the liquid tank 50. The reference electrode 53 can be immersed in the electrolyte solution 6 contained in the liquid tank 50. The reference electrode 53 is provided for measuring a voltage applied to the MEA 51. Examples of the reference electrode 53 include a standard hydrogen electrode and so on.

Each of the MEA 51, the counter electrode 52, and the reference electrode 53 is electrically connected to a power supply device 7. The power supply device 7 can apply a voltage to the MEA 51 and the counter electrode 52. The power supply device 7 may be provided inside the valuable resource recovery device 5 and may be provided outside thereof. The power supply device 7 can periodically switch a polarity of a voltage applied to an anode 101 and a cathode 102 of the MEA 51. The polarity of the voltage applied to the anode 101 and the cathode 102 may be switched by a relay circuit provided between the power supply device 7 and the MEA 51 as well as the counter electrode 52, for example. Other explanation of the power supply device 7 can be adapted from that of the power supply device 2 as appropriate.

The MEA 51 is connected to a temperature control device 9. The temperature control device 9 can heat the MEA 51. The temperature control device 9 may be provided inside the valuable resource recovery device 5 and may be provided outside thereof. The temperature control device 9 includes, for example, a heater. For example, by heating an electrochemical device by the temperature control device 9, an oxide reduction process S1 can be performed at a temperature equal to or higher than 100°C, for example.

As described above, the second configuration example of the electrochemical device is a dedicated valuable resource recovery device for recovering a valuable resource, and by mounting the MEA removed from another electrochemical device and implementing the example of the method of recovering the valuable resource, it is possible to recover noble metals such as platinum and iridium, which are used as the anode catalyst and the cathode catalyst, by the same process. This allows easy recovery of the valuable resource.

EXAMPLES

(Comparative Example 1, Example 1, Example 2)

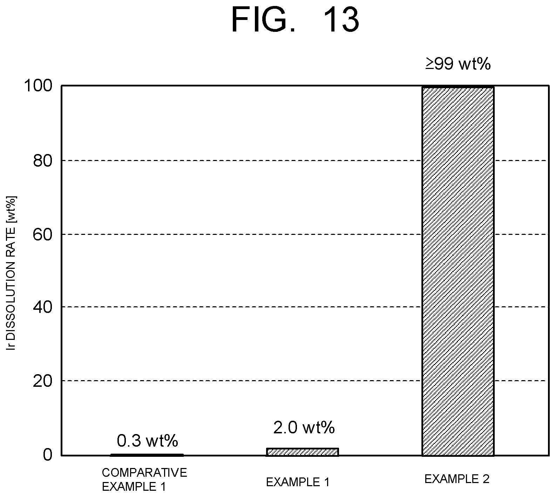

An $IrO_2$ dissolution test was implemented. An $IrO_2$ sample was used as an object to be dissolved, and in an oxide reduction process S1, a hydrogen gas was brought into contact with this sample for one hour as the oxide reduction process S1, to perform reduction operation of $IrO_2$. In an electrolytic dissolution process S2, the sample subjected to the oxide reduction process S1 was immersed in a hydrochloric acid solution, and electrolysis was performed for three hours while a polarity was reversed alternately at two potentials of 0.1 V (vs. RHE) and 1.5 V (vs. RHE). FIG. 13 illustrates an Ir dissolution rate calculated from a weight of Ir contained in the solution after electrolysis and a weight of Ir in the initial sample. In a sample (Comparative Example 1) to which an electrolytic dissolution process S2 was performed without an oxide reduction process S1, which was performed for comparison, an Ir dissolution rate was 0.3 wt%. In a sample (Example 1) to which an oxide reduction process S1 was performed at a room temperature, an Ir dissolution rate increased slightly to 2.0 wt%, and in a sample (Example 2) to which an oxide reduction process S1 was performed at 150°C, an Ir dissolution rate reached equal to or higher than 99 wt%. It is known that hydrogen reduction of $IrO_2$ proceeds at a significant speed at 100°C or higher, and it is reasonable that the $IrO_2$ dissolution rate was higher in the sample to which hydrogen reduction was performed at 150°C.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A method of recovering a valuable resource from an electrochemical device, the electrochemical device comprising a catalyst of an oxide of a noble metal, the method comprising:

    reducing the oxide while heating an object that has the catalyst; and
    applying a voltage to the object that is in contact with a solution containing at least one selected from the group consisting of ion species and chemical species which can form a complex with the noble metal, continuously increasing an absolute value of the voltage and then holding the value while periodically reversing a polarity of the voltage to perform an electrolytic reaction and dissolve the reduced noble metal in the solution as ions.

2. The method according to claim 1, wherein

    the reducing the oxide is performed by
    a first method of supplying a solution containing a reducing agent and bringing the reducing agent into contact with the object,

a second method of supplying a reducing gas and bringing the reducing gas into contact with the object, or a third method of bringing an electrolytic solution into contact with the object, applying a voltage to the object, and performing an electrolytic reaction without reversing a polarity of the voltage.

3. The method according to claim 1, wherein

the object has
an electrode having the catalyst, and
a polymer electrolyte membrane.

4. The method according to claim 1, wherein
the reducing the oxide is performed at a temperature equal to or higher than 100°C.

5. The method according to claim 1, wherein
the dissolving of the noble mental includes alternately repeating:

a first period in which a value of the voltage is decreased linearly or curvilinearly from a first value to equal or lower than a second value that is lower than the first value and then held; and
a second period in which the value of the voltage is increased linearly or curvilinearly from a third value the same as or different from the first value to equal to or higher than a fourth value that is higher than the third value and then held.

6. The method according to claim 5, wherein

a time necessary for the value of the voltage to reach the second value from the first value is 0.6 seconds or longer in the first period, and
a time necessary for the value of the voltage to reach the fourth value from the third value is 0.6 seconds or longer in the second period.

7. The method according to claim 1, wherein
the catalyst contains at least one noble metal selected from the group consisting of platinum, iridium, ruthenium, rhodium, palladium, gold, and rhenium.

# FIG. 1

```
        START
          │
          ▼
┌─────────────────────┐
│   OXIDE REDUCTION   │ ─── S1
└─────────────────────┘
          │
          ▼
┌─────────────────────┐
│     ELECTROLYTIC    │ ─── S2
│      DISSOLUTION    │
└─────────────────────┘
          │
          ▼
         END
```

# FIG. 2

MEA

102
103
101

# FIG. 3

REPEAT

P1　　P2

VOLTAGE [V]

Y

0

X

TIME [SECOND]

# FIG. 4

REPEAT

P1　　P2

VOLTAGE [V]

Y

0

X

T1　T2　　T3　T4　　T5

TIME [SECOND]

# FIG. 5

# FIG. 6

# FIG. 7

## FIG. 8

## FIG. 9

# FIG. 10

# FIG. 11

# FIG. 12

# FIG. 13

Europäisches
Patentamt

European
Patent Office

Office européen
des brevets

# EUROPEAN SEARCH REPORT

Application Number

EP 25 19 0387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUILLET FRANÇOIS ET AL: "Electrochemical recovery of Pt/C electrocatalyst: optimization of the potential range on the leaching process and application to an aged MEA", INDUSTRIAL CHEMISTRY & MATERIALS, vol. 2, no. 1, 3 October 2023 (2023-10-03), pages 118-131, XP093366031, ISSN: 2755-2608, DOI: 10.1039/D3IM00085K * page 120, column 1, paragraph 2; table 1 * ----- | 1-7 | INV. C22B11/00 C22B3/04 C22B5/12 H01M8/008 C25B1/01 C25B1/50 |
| A | CN 114 921 814 B (UNIV SHANGHAI 2ND POLYTECHNIC) 24 May 2024 (2024-05-24) * paragraph [0004]; example 1 * * paragraph [0018] - paragraph [0021] * ----- | 1-7 | |
| | | | **TECHNICAL FIELDS SEARCHED (IPC)** |
| | | | C22B H01M |

The present search report has been drawn up for all claims

| Place of search | Date of completion of the search | Examiner |
|---|---|---|
| The Hague | 24 February 2026 | Telias, Gabriela |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 25 19 0387**

This annex lists the patent family members relating to the patent documents cited in  the above-mentioned European search report.
The members are as contained in the European Patent Office EDP file on
The European Patent Office is in no way liable for these particulars which are merely given for the purpose of information.

**24-02-2026**

| Patent document cited in search report | Publication date | Patent family member(s) | Publication date |
|---|---|---|---|
| CN 114921814    B | 24-05-2024 | NONE | |

For more details about this annex : see Official Journal of the European Patent Office, No. 12/82

## REFERENCES CITED IN THE DESCRIPTION

### Patent documents cited in the description

- JP 1626036 A
- JP 6652518 B
- JP 6652454 B
- JP 6109769 B
- JP 63270421 A

### Non-patent literature cited in the description

- **KOFUJI et al.** CO2 Electrolysis Cell Operating at High Current Density for Power-to-Chemicals Co2 Utilization. *Toshiba Review*, November 2020, vol. 75 (6), 48-51
- **MOHAMMAD FATHI TOVINI et al.** Degradation Mechanism of an IrO2 Anode Co-Catalyst for Cell Voltage Reversal Mitigation under Transient Operation Conditions of a PEM Fuel Cell. *J. Electrochem. Soc.*, 2021, vol. 168, 064521